# EUROPEAN PATENT APPLICATION

(11) **EP 2 400 377 A2**
(43) Date of publication of application: **28.12.2011**
(21) Application number: 11170683.4
(22) Date of filing: 21.06.2011
(51) Int. Cl.: G06F 3/033

(54) **Composite sensing apparatus, sensing method using composite sensor and touch pad apparatus using the same**

(30) Priority: 23.06.2010 KR 20100059630
(71) Applicant: SAMSUNG ELECTRONICS CO., LTD., Suwon-si Gyeonggi-do 442-742 (KR)
(72) Inventor: Lee, Sung-han, Gyeonggi-do (KR); Kang, Keun-seok, Gyeonggi-do (KR); Yang, Sun-ho, Seoul (KR); Lee, Sang-hoon, Gyeonggi-do (KR)
(74) Representative: Clark, David James

(57) **Abstract**

A composite sensing apparatus, a sensing method using a composite sensor, and a touch pad apparatus using the same are provided. The composite sensing apparatus includes a pad unit including a first sensing area which senses a fingerprint, and a second sensing area which senses a touch state, and a control unit which generates control signals according to results sensed by the first and the second sensing areas. As a result, the sensing apparatus can simultaneously have a fingerprint recognition sensor and a touch pad sensor.

## Description

### 1. Field

Apparatuses and methods consistent with exemplary embodiments relate to a composite sensing apparatus, a sensing method using a composite sensor, and a touch pad apparatus using the same, and more particularly, to a composite sensing apparatus using a fingerprint recognizing sensor and a touch pad sensor, and a sensing method using a composite sensor.

### 2. Description of the Related Art

It has become common for products to utilize a touch pad. A user tends to favor a touch pad type electronic appliance having more improved convenience than a conventional button type electronic appliance these days. There are a countless number of products using touch pads, such as digital cameras, multimedia devices, audio/video (AV) devices, mobile devices, etc. There are also various methods proposed for augmenting a security of a user. Among these, sensors utilizing biometric information of individuals are used in electronic appliances. In electronic banking, mobile banking, general banking and the like, methods of accessing private details by using an officially recognized certificate or biometric information are common. Particularly, various products, such as a notebook, an electronic key, etc., use a fingerprint recognizing system.

Whereas the touch pad is a tool used to improve the convenience of the user, the fingerprint recognizing system is a tool for a security system to augment the security. Accordingly, a goal of the touch pad is different from a goal of the fingerprint recognizing system. However, in using the products, there are many cases that require having both the touch pad and the fingerprint recognizing system. Also, both the touch pad and the fingerprint recognizing system use a method of determining movement of the user or identifying the user by using sensors. To substantially catch the size of a fingerprint of the user, the fingerprint recognizing system or fingerprint recognizing sensor should be provided in a restricted size and form. However, there is a problem that it is difficult for the fingerprint recognizing sensor to be disposed in the same space as a space for the touch pad or the touch pad sensor and thereby the touch pad sensor and the fingerprint recognizing sensor takes up separate spaces.

Accordingly, in view of current trend that the products are getting smaller, there is a need for a method to have the touch pad sensor and the fingerprint recognizing sensor together in a restricted space.

Exemplary embodiments overcome the above disadvantages and other disadvantages not described above. Also, the exemplary embodiments are not required to overcome the disadvantages described above, and an exemplary embodiment may not overcome any of the problems described above.

One or more exemplary embodiment provide a sensing apparatus simultaneously having a fingerprint recognizing sensor and a touch pad sensor thus to have both functions even in a restricted space, and a sensing method thereof.

According to an aspect of an exemplary embodiments, there is provided a composite sensing apparatus including a pad unit including a first sensing area which senses a fingerprint, and a second sensing area which senses a touch state, and a control unit which generates control signals according to results sensed by the first and the second sensing areas.

The control unit may determine a movement amount per unit time based on at least one of a motion of a user sensed in the first sensing area and a motion of the user sensed in the second sensing area, and determines a movement of the user based on the determined movement amount per unit time.

When at least one motion of a user is sensed in the second sensing area and then sensed in the first sensing area, the control unit obtains results sensed in each of the first and the second sensing areas and may combine the results sensed by the first and the second sensing areas to determine a movement of the user.

The pad unit may further include a gap area which is interposed between and separates the first and the second sensing areas.

When at least one motion of a user is sensed in the second sensing area and then sensed in the first sensing area within a predetermined time, the control unit may determine that a movement of the user is made from the second sensing area to the first second sensing area through the gap area. Also, when at least one motion of the user sensed in the second sensing area and then sensed in the first sensing area are not sensed within the predetermined time, the control unit may determine that the movement of the user is separately made in the first and the second sensing areas.

When at least one motion of a user is sensed at the first sensing area and then sensed at the second sensing area, the control unit obtains results sensed in each of the first and the second sensing areas and combines the results sensed by the first and the second sensing areas to determine a movement of a user.

The first sensing area may be disposed in a central portion of the second sensing area such that the first sensing area is surrounded by the second sensing area.

The control unit may determine a present state of the first sensing area as a fingerprint recognition state when a touch of a user sensed in the first sensing area is detected as being maintained for more than a predetermined time.

According to an aspect of another exemplary embodiment, there is provided a sensing method which uses a pad unit including a first sensing area which senses a fingerprint, and a second sensing area which senses a touch state, the method including sensing a motion of a user in at least one of the first and the second sensing areas, and determining a movement of the user based on results of the sensing.

The sensing method may further include generating control signals based on the determined movement of the user.

The determining may determine a movement amount per unit time based on at least one of the motion of the user sensed in the first sensing area and the motion of the user sensed in the second sensing area, and determine the movement of the user based on the determined movement amount per unit time.

When at least one motion of the user is sensed in the second sensing area and then sensed in the first sensing area, the determining may combine the results sensed in the first and the second sensing areas to determine the movement of the user.

The pad unit may further include a gap area which is interposed between and separates the first and the second sensing areas, and the determining may determine when at least one motion of the user is sensed in the second sensing area and then sensed in the first second sensing area within a predetermined time, that the movement of the user is made from the second sensing area to the first second sensing area through the gap area. The determining may also determine when at least one motion of the user sensed in the second sensing area and then sensed in the first sensing area are not sensed within the predetermined time, that the movement of the user is separately made in the first and the second sensing areas.

The determining may determine that the motion of the user is made from a motion starting point of the user in the second sensing area to a motion completing point of the user in the first sensing area.

When at least one motion of the user is sensed in the first sensing area and then sensed in the second sensing area, the determining may combine the results sensed in the first and the second sensing areas to determine the movement of the user.

The generating the control signals may determine at least one of a movement distance and a movement time of the user based on the motion of the user sensed in at least one of the first sensing area and the second sensing area, and generate the control signals based on at least one of the determined movement distance and the determined movement time.

The sensing method may further include determining a present state of the first sensing area as a fingerprint recognition state when a touch of the user sensed in the first sensing area is detected as being maintained for more than a predetermined time.

According to an aspect of another exemplary embodiment, there is provided a touch pad apparatus including a first sensor part which performs a first sensing operation and comprises a non-sensing area therein, and a second sensor part disposed in the non-sensing area and performs a second sensing operation different from the first sensing operation of the first sensor part.

According to the present invention there is provided an apparatus and method as set forth in the appended claims. Other features of the invention will be apparent from the dependent claims, and the description which follows.

### BRIEF DESCRIPTION OF THE DRAWINGS

The above and/or other aspects of the exemplary embodiments will become more apparent by describing exemplary embodiments with reference to the accompanying drawings, in which:
FIG. 1 is a block diagram illustrating a construction of a composite sensing apparatus according to an exemplary embodiment;
FIGS. 2A to 2D are views illustrating examples of a construction of a pad unit in the composite sensing apparatus according to the exemplary embodiment;
FIG. 3 is a view for explaining a sensing method applied to the composite sensing apparatus according to an exemplary embodiment;
FIGS. 4A to 4C are views for explaining the sensing method applied to the composite sensing apparatus according to the exemplary embodiment;
FIG. 5 is a view for explaining a sensing method applied to the composite sensing apparatus according to another exemplary embodiment;
FIG. 6 is a flowchart for explaining a sensing method according to an exemplary embodiment; and
FIG. 7 is a flowchart for explaining a sensing method according to another exemplary embodiment.

### DETAILED DESCRIPTION OF EXEMPLARY EMBODIMENTS

Exemplary embodiments are described in greater detail below with reference to the accompanying drawings.

In the following description, like drawing reference numerals are used for the like elements, even in different drawings. The matters defined in the description, such as detailed construction and elements, are provided to assist in a comprehensive understanding of the exemplary embodiments. However, the exemplary embodiments can be practiced without those specifically defined matters. Also, well-known functions or constructions are not described in detail since they would obscure the application with unnecessary detail.

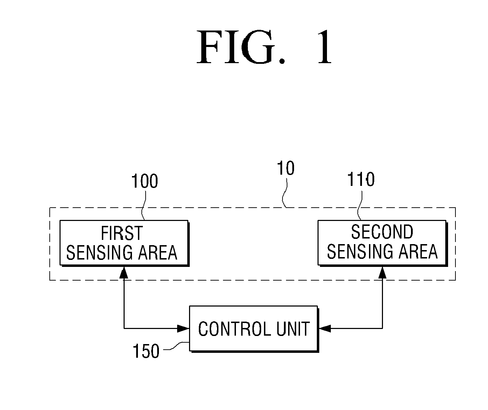

FIG. 1 is a block diagram illustrating a construction of a composite sensing apparatus according to an exemplary embodiment. The composite sensing apparatus according to the exemplary embodiment includes a pad unit 10, and a control unit 150. The pad unit 10 is a portion where a user touches the apparatus to perform operations or otherwise interact with the apparatus by touch. The pad unit 10 may consist of a first sensing area 100 including a fingerprint recognizing sensor, and a second sensing area 110 including a touch pad sensor.

The first sensing area 100 is a sensing area including a fingerprint recognizing sensor for identifying a user. In other words, as the user places her or his finger on the first sensing area 100, the control unit 150 to be described in detail later analyzes data on distributions of characteristics, such as shapes, lengths and directions of ridges in a fingerprint included in the finger of the user sensed in the first sensing area 100 and thus identifies/authenticates the user. To be specific, the fingerprint is made up of ridges protruded from an epidermal surface and valleys forming spaces between the ridges. Patterns of the ridges and the valleys of the fingerprint are different to individuals. Thus, the fingerprint recognition can be done by using a uniqueness of and a difference between the patterns. Since such a fingerprint recognition sensor used in the first sensing area 100 is described in related arts, a detailed description on construction thereof will be omitted.

The second sensing area 110 is a sensing area including a touch pad sensor for sensing a touch of the user. To be specific, the touch pad sensor responds to the touch of the user and determines a position where the user touches. The control unit 150 analyzes input data to determine a move of the user on the pad unit 10, and thus, is able to track the movement of the user's touch on the pad unit 10.

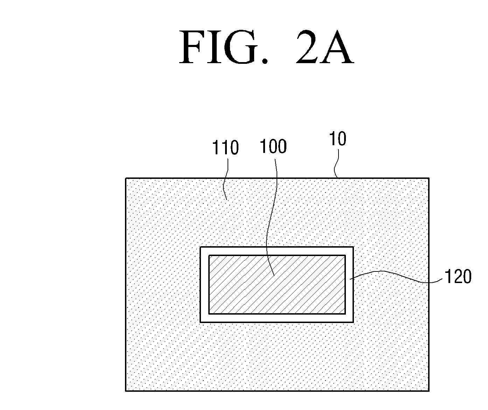

The first and the second sensing areas 100 and 110 are disposed along with each other in a single pad unit 10. In this case, one of the first and the second sensing areas 100 and 110 may be formed inside the other of the first and the second sensing areas 100 and 110. Generally, since the first sensing area 100 including the fingerprint recognizing sensor has a spatial restriction, that is, the first sensing area 100 should be restricted in a certain area to recognize the finger print, it is preferably provided in the second sensing area 110 including the touch pad sensor. To be specific, the first sensing area 100 may be arranged in a given area of a central portion of the second sensing area 110. However, it goes without saying that the exemplary embodiments are not limited thereto, and the first sensing area 100 may be also disposed in a left side, a right side, an upper side, or a lower side of the second sensing area 110. Physical configurations of the first and the second sensing areas 100 and 110 will be explained with reference to FIGS. 2A to 2D.

The control unit 150 receives sensed data from the first and the second sensing areas 100 and 110 and determines the movement of the user based on the received data. Here, the movement of the user means a movement that the user touches the pad unit 10 including the first and the second sensing areas 100 and 110 with her or his finger, and at the same time, moves her or his finger along the surface of the pad unit 10.

To be more specific, because the sensors included in the first and the second sensing areas 100 and 110 are not the same, the control unit 150 collects data related to motions of the user sensed at the sensors included in the respective first and second sensing areas 110 and 110, and combines the collected data to determine a whole movement of the user. Here, combining the collected data includes connecting a motion of the user determined from the data of the first sensing area 100 and a motion of the user determined from the data of the second sensing area 110 based on a predetermined time, or calculating a motion starting point and a motion completing point by determining motion points, thus to determine the movement of the user. Here, the predetermined time comes to a criterion for determining whether the movement of the user is made from the first sensing area 100 to the second sensing area 110 in the form of a stroke, or whether the movement of the user is separately made in the first and the second sensing areas 100 and 110.

That is, after one motion of the user is sensed in the first sensing area 100, if motion of the user is made in the second sensing area 110 within the predetermined time, it is determined that a movement of the user is made from the first sensing area 100 to the second sensing area 110 (e.g., in the form of a continuous stroke), whereas if motion of the user is made in the second sensing area 110 after the predetermined time, it is determined that the movement of the user is separately made in the first and the second sensing areas 100 and 110.

Similarly, even when one motion is first sensed in the second sensing area 110 and then motion is sensed in the first sensing area 100, the movement of the user is determined by the same manner as described above.

On the other hand, although there is not illustrated in FIG. 1, the composite sensing apparatus may further include a display unit if it is applied to or embodied in a display apparatus, such as a television (TV), a portable media player (PMP), mobile telephone, tablet computer or the like. At this time, the control unit 150 can determine the movement of the user as described above, so that it generates control signals to perform an operation for changing a picture or moving a cursor displayed on the display unit. In addition, the composite sensing apparatus may further include a storing unit (not shown) for storing the predetermined time, which is a criterion for determining the movement of the user. Moreover, if the composite sensing apparatus is applied to a product, such as a remote controller or the like, the control unit 150 will generate a control signal based on the movement of the user to control an outer appliance that corresponds to the remote controller. Also, the control signal may be an infrared (IR) signal or a radio frequency (RF) signal, and the composite sensing apparatus may further include a communication unit (not shown) or a signal transmitting unit (not shown) for transmitting the control signal.

In other words, the construction shown in FIG. 1 is illustrated as including only the most basic components, and other components may be added thereto according to practical applications, as exemplified above.

FIGS. 2A to 2D illustrate examples of the construction of the pad unit for sensing the motion of the user. That is, each of the pad units 10 includes a first sensing area 100 and a second sensing area 110.

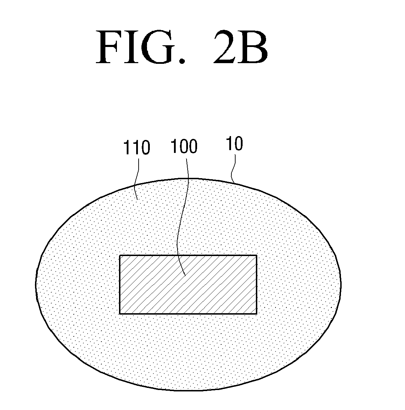

In FIG. 2A, a pad unit 10 is provided with a first sensing area 100 including a fingerprint recognizing sensor and a second sensing area 110 including a touch pad sensor, and the second sensing area 110 is configured in the form of one body. A gap area 120, which does not have any sensor, exists between the first sensing area 100 and the second sensing area 110 to divide the first sensing area 100 and the second sensing area 110. As the gap area 120 physically divides the first sensing area 100 and the second sensing area 110, it can prevent sensing errors which occur in the respective sensing areas 110 and 110. In other words, by providing a gap area 120 not having any sensor between the first sensing area 100 and the second sensing area 110, sensing errors resulting from simultaneously touching the first sensing area 100 and the second sensing area 110 (i.e., when it is not clear if the motion of the user is sensed in the first sensing area 100 or the second sensing area 110) can be prevented. In FIG. 2B, a second sensing area 110 included in a pad unit 10 is also configured in the form of one body, but there is no gap area between the first and second sensing areas as there is in FIG. 2A. That is, FIG. 2B shows that a first sensing area 100 and the second sensing area 110 can be configured in a form adjacent to each other such that their boundaries are in direct contact with each other. The pad unit 10 may have any other form, and although the first sensing area 100 is illustrated in the form of a rectangle, it may have any other shape.

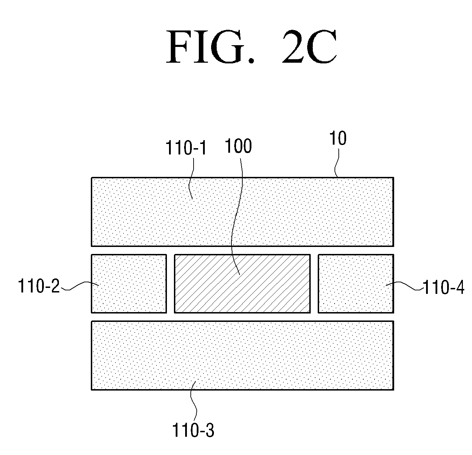

In FIG. 2C, a construction of a pad unit 10 is similar to that in FIG. 2A, but a second sensing area 110 is made up of a plurality of touch pad sensors 110-1, 110-2, 110-3, and 110-4. In this case, the touch pad sensors can be individually controlled to sense motions of the user to determine a whole movement of the user based on the sensed motions of the user. However, it will also be possible that they are controlled as a whole to sense the motions of the user.

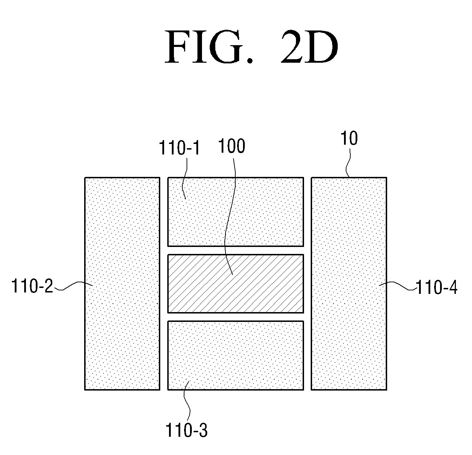

FIG. 2D illustrates a modified example of FIG. 2C, and shows that a second sensing area 110 is provided with a plurality of touch pad sensors 110-1, 110-2, 110-3, and 110-4 like in FIG. 2C, but it may have different structure from that of FIG. 2C.

That is, as illustrated in FIGS. 2A to 2D, the first sensing area 100 and the second sensing area 110 forming the pad unit 10 may have various forms, and controlling the sensors is changed in different ways accordingly. However, determining the whole movement of the user based on the motions sensed in the respective sensing areas is the same as that described above, e.g., using the predetermined time.

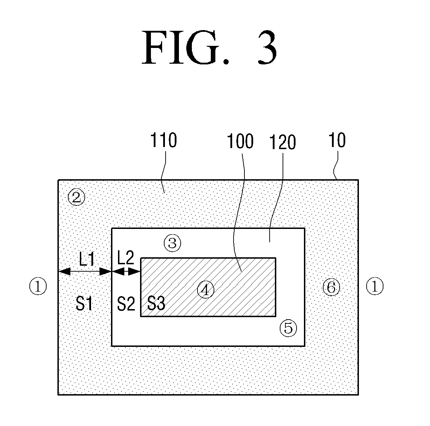

Hereinafter, a sensing method for use in the composite apparatus according to an exemplary embodiment will be explained in detail with reference to FIG. 3. In the following description, it is assumed that a pad unit 10 of the composite apparatus has the same construction as that of the pad unit 10 shown in FIG. 2A. To be specific, the pad unit 10 shown in FIG. 3 is made up of a first sensing area 100 including a fingerprint recognizing sensor, a second sensing area 110 in the form of one body including a touch pad sensor, and a gap area 120 dividing the first sensing area 100 and the second sensing area 110 and not having any sensor.

Further, to explain a movement of the user, points of the pad unit 10 where the user touches are designated by ①, ②, ③, ④, ⑤, and ⑥, an outer width of the second sensing area 110 is designated by L1, and an outer width of the gap area 120 is designated by L2.

If the user touches the pad unit with her or his finger and at the same time, moves her or his finger from point ① to point ②, since a motion of the user is made only within the second sensing area 110 having the touch pad sensor, the control unit 150 determines that a movement of the user is made from point ① to point ②, based on the motion of the user sensed in the second sensing area 110. In addition, since the second sensing area 110 can sense that the motion of the user is started at point ① and completed at point ②, the control unit 150 can determine an initial motion starting point and a final motion completing point to determine the movement of the user.

Also, if the user touches the pad unit with her or his finger, and at the same time, moves her or his finger from point ① to point ③, a movement of the user is made in the gap area 120 as well as the second sensing area 110 having the touch pad sensor. However, since the gap area 120 does not have any sensor, the control unit 150 comes to determine only a motion of the user sensed in the second sensing area 110, and thereby can recognize that the movement of the user was made by the amount of width L1 at most from the left to the right, based on the motion of the user sensed in the second sensing area 110. In other words, since the movement of the user can be determined up to a border between the second sensing area 110 and the gap area 120, it can be recognized that a maximum movement distance of the user is up to L1. The distance L1 may be set to vary according to a magnitude of the pad unit 10 and how to process data received from the sensors.

Referring again to FIG. 3, if the user moves her or his finger from point ① to point ④, it follows that a movement of the user proceeds into the first sensing area 100 from the second sensing area 110. In this case, the second sensing area 110 senses a motion of the user moved by the distance L1 from the left to the right, and since motion of the user is not sensed while the finger of the user is passing the gap area 120, the first sensing area 100 senses a motion of the user moved from the left to right after a slightly delayed time, e.g., the time it takes the user's finger to move into the first sensing area 110 after moving out of the second sensing area 100.

In other words, the motion of the user is sensed in the second sensing area 110, is not sensed for a little time-gap, and is then sensed again in the first sensing area 100. In this case, the control unit 150 receives three sets of data, including, data from the second sensing area 110, data from the first sensing area 100, and data related to a time interval between motion sensing times of the second sensing area 110 and motion sensing times of the first sensing area 100.

In this case, if it is determined that the movement of the user is made from point ① to point ④ even when the motion of the user is sensed in the second sensing area 110 and then sensed again in the first sensing area 100 after quite a while, a problem may occur.

To be more specific, if the user moves her or his finger from point ① to point ④, the movement of the user will typically be made relatively fast from the second sensing area 110 to the first sensing area 100. Accordingly, to determine the movement of the user, it is preferred to have a predetermine a time for determining the movement of the user. That is, if the motion of the user is sensed in the second sensing area 110 and then sensed again in the first sensing area 100 within the predetermined time, it is determined that the movement of the user is made from point ① to point ④. To the contrary, if the motion of the user is sensed in the second sensing area 110 and then sensed again in the first sensing area 100 after the predetermined time, it is determined that the movement of the user is not continuously made from point ① to point ④, but instead separate movements of the user are made in the second sensing area 110 and the first sensing area 100, respectively.

The predetermined time may be preset in a design of sensor or may be set by an adjustment of the user. In addition, even though the predetermined time is preset to 't', it will also be able to set a tolerance limit because magnitudes of the second sensing area 110, the gap area 120 and the first area 100 can vary in manufacturing or the like. For instance, if a criterion time is referred to t, the predetermined time can be reset in a value 't', which is calculated by a formula 't'= (L1 + L2) x (1/t ± e), in view of the tolerance limit. However, it goes without saying that such a formula is merely illustrated and the exemplary embodiments are not limited thereto.

The above description is similarly applicable to the case when the user does not start moving from the second sensing area 110, but she or he starts moving from the first sensing area 100. That is, a whole movement of the user may be determined by determining whether a motion of the user is sensed in the first sensing area 100 and then sensed in the second sensing area 110. In FIG. 3, this will be applied when a movement of the user is made from point ④ to the point ⑥ or from point ④ to point ①.

Also, in the above description, although the sensing method according to the exemplary embodiment is explained as being applied to the composite sensing apparatus having the construction of the pad unit 10 as illustrated in FIG. 2A, it will be obvious to those skilled in the art in view of the above explanation that the above description can also be applied in the same manner to the composite sensing apparatus having the construction of the pad unit 10 as illustrated in FIG. 2B and the composite sensing apparatuses having the second sensing area 110 with the plurality of sensors as illustrated in FIGS. 2C and 2D.

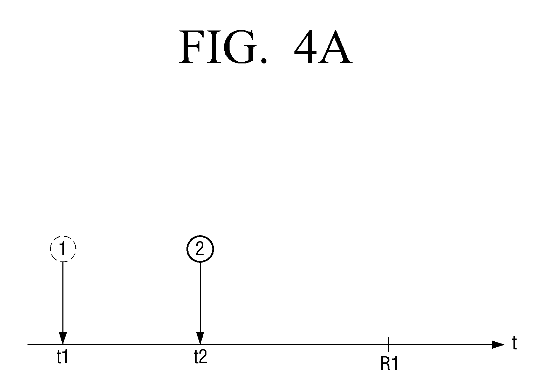

Hereinafter, a sensing method for use in the pad unit 10 illustrated in FIG. 3 will be explained in chronological order with reference to FIGS. 4A to 4C. Here, a horizontal line represents a lapse of time, and R1 represents a predetermined time, that is, a criterion time for determining a movement of the user, as described above. Also, t1 to t4 represent times when any one of points ①, ②, ③, ④, ⑤, and ⑥ illustrated in FIG. 3 is touched by the user.

FIG. 4A shows when in FIG. 3, a movement of the user is made from point ① to point ②. Within the predetermined time R1, the user touches the pad unit from point ① to point ②. In other words, the second sensing area 110 senses the movement of the user proceeded to point ②.

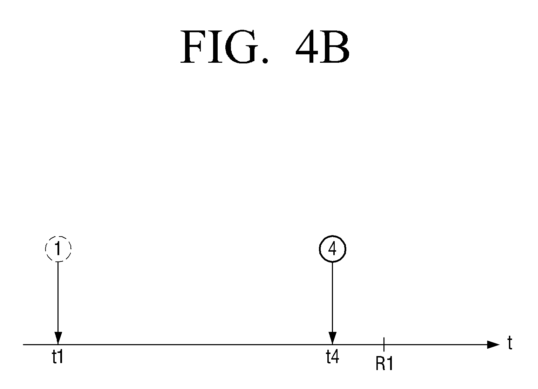

FIG. 4B shows when in FIG. 3, a movement of the user is made from point ① to point ④. That is, the movement of the user is made from point ① to point ④, but all of the motions of the user is sensed in the second sensing area 110 and the first sensing area 110 within the predetermined time R1. Accordingly, the control unit 150 combines the motions of the user sensed in the respective sensing areas 110 and 100, so that it determines that the movement of the user is made from point ① to point ④. Accordingly, even though the motion of the user passes the gap area 120 while the motion of the user is sensed in the second sensing area 110 and then sensed in the first sensing area 100, the control unit 150 determines that that the movement of the user is made from point ① to point ④ continuously because a time interval or gap during which the motion of the user is not sensed is within a given time. That is, the time to allow a movement between ① to point ④ does not exceed the predetermined time R1.

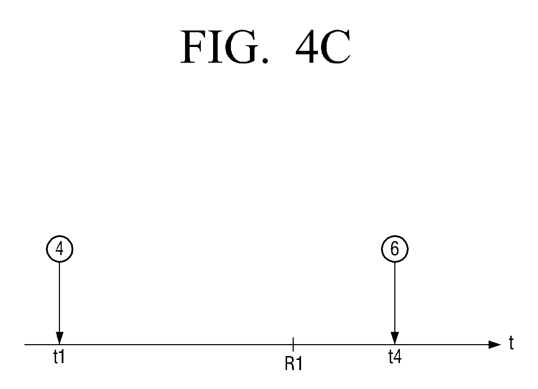

However, as illustrated in FIG. 4C, if a motion of the user is sensed at point ④ in the first sensing area 100 at a time t1 and after the predetermined time R1, sensed at point ⑥ in the second sensing area 110 at a time t4, since the time t4 is beyond the predetermined time R1, the control unit 150 determines that the motions of the user are not continuously made, but are instead separately made.

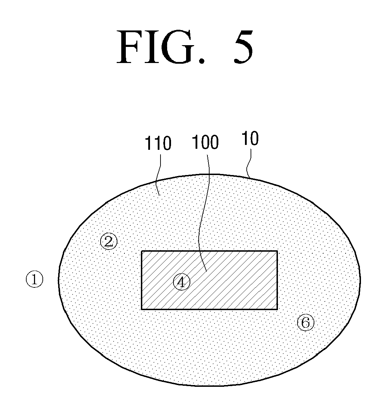

FIG. 5 shows that a construction of a pad unit 10 is the same as illustrated in FIG. 2B. A movement of the user may be determined even when the pad unit 10 is not provided with any gap area as illustrated in FIG. 5.

To be more specific, if the movement of the user is made from a point ① to point ④, motions of the user are sensed in the second sensing area 110 and the first sensing area 100, respectively, and thus the control unit 150 determines a whole movement of the user based on data related to the motions of the user, that is, data related to a point where the motion of the user is started and a point where the motion of the user is completed.

However, since the pad unit 10 is not provided with any gap area, there is no time gap by the gap area not having the sensor while the movement of the user is made from the second sensing area 110 to the first sensing area 100.

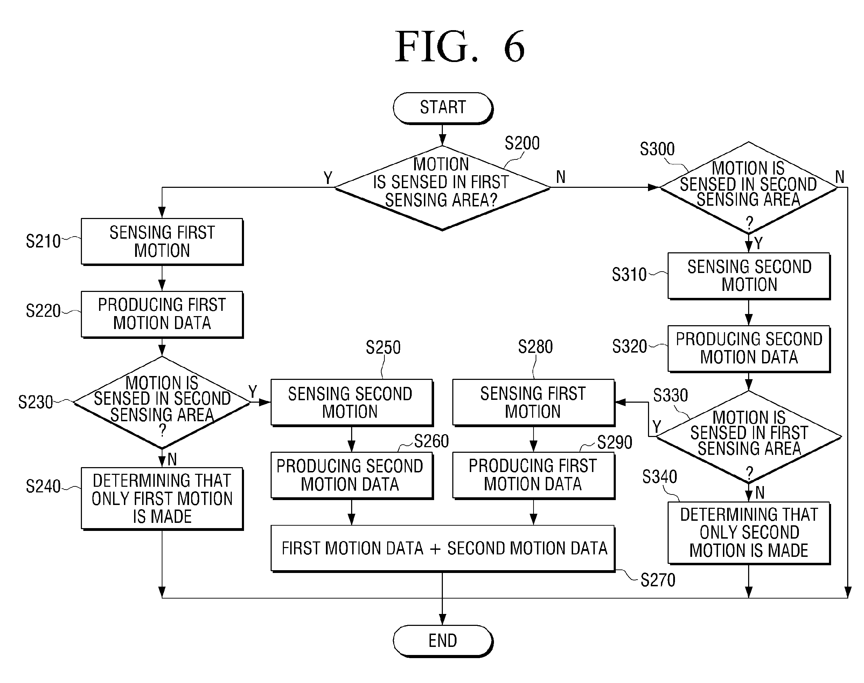

In addition, the first sensing area 100 should act as the fingerprint recognizing sensor, and in this case it could also be possible to perform a fingerprint recognition function while it is used as a touch pad. To prevent this, the first sensing area 100 may be controlled to act as the fingerprint recognizing sensor only when the movement of the user is maintained within the first sensing area 100 including the fingerprint recognizing sensor for a given time. Also, to control the first sensing area 100 to not sense the fingerprint of the user, a separate function key or a locking device may be provided, thereby preventing the fingerprint of the user from being inadvertently sensed while the user uses the first sensing area 100 as the touch pad. Hereinafter, a sensing method according to an exemplary embodiment will be explained. FIG. 6 is a flowchart for explaining a sensing method according to an exemplary embodiment.

First, it is determined whether a motion of the user is sensed in the first sensing area (S200). If the motion of the user is not sensed in the first sensing area (S200-N), it is determined whether a motion of the user is sensed in the second sensing area (S300). If the motion of the user is also not sensed in the second sensing area (S300-N), the pad unit remains in standby by until a motion of the user is sensed.

If the motion of the user is sensed in the first sensing area (S200-Y), a first motion of the user is sensed (S210), and data on the first motion is generated or produced (S220). After that, it is determined whether a motion of the user is sensed in the second sensing area (S230), and if the motion of the user is not sensed in the second sensing area (S230-N), it is determined that only the first motion of the user in the first sensing area is made (S240). After that, the control unit 150 may perform an operation, such as generating a control signal or the like, through the data produced in the step S220. In FIG. 6, only a process of determining the movement of the user is illustrated, and the operation of the control unit 150 thereafter is not illustrated because it is the same as explained above.

On the other hand, if the data of the first motion is produced in S220 and then the motion of the user is sensed in the second sensing area (S230-Y), a second motion of the user is sensed in the second sensing area (S250), and data on the second motion is produced (S260). In this case, the movement of the user is determined by combining the first motion data produced in the first sensing area and the second motion data produced in the second sensing area.

Also, if the motion of the user is not sensed in the first sensing area, but sensed in the second sensing area (S300-Y), the same steps as described above are carried out. To be specific, a second motion of the user is sensed (S320), and data on the second motion is produced (S320). After that, it is determined whether a motion of the user is sensed again in the first sensing area (S330), and if sensed in the first sensing area (S330-Y), a first motion of the user is sensed (S280) and data on the first motion is produced (S290). The first motion data is combined with the second motion data previously produced in the second sensing area to determine the movement of the user (S270).

However, if after the second motion data is produced in the second sensing area, the motion of the user is not sensed in the first sensing area (S330-N), it is determined that only the second motion in the second sensing area is made (S340).

In the above description, although the sensing method according to the exemplary embodiment is explained as first determining whether the motion of the user is sensed in the first sensing area, it is possible to first determine whether the motion of the user is sensed in the second sensing area, and this will be obvious by the above explanation.

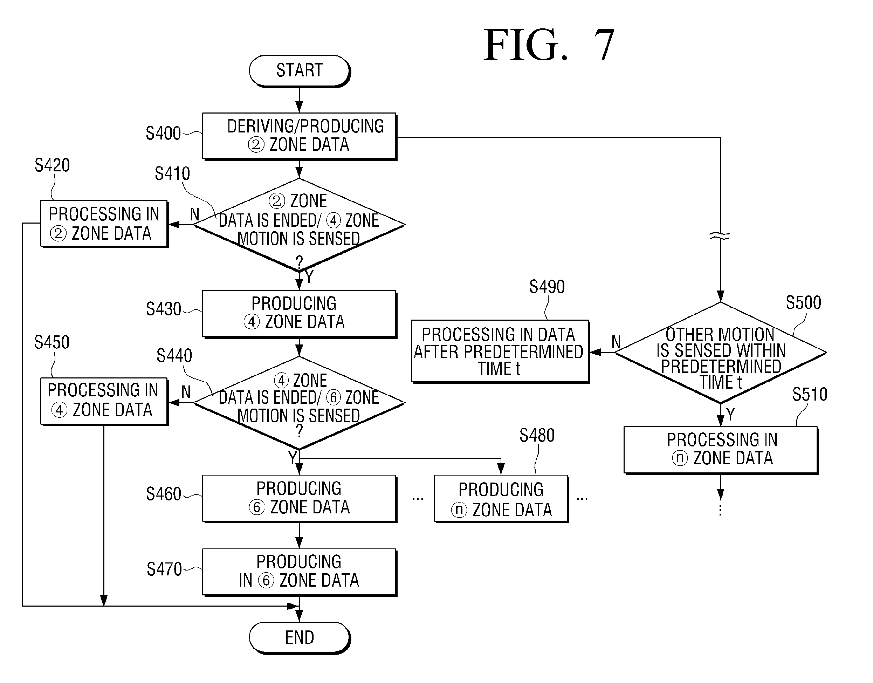

FIG. 7 is a flowchart for explaining a sensing method according to another exemplary embodiment. In the flowchart, respective numbers in circles refer to the same numbers as indicated in the pad unit 10 illustrated in FIG. 3. Also, respective letters "n" in circles refer to numbers available except the numbers indicated in the pad unit 10 as illustrated in FIG. 3.

If a motion of the user is sensed at a point or in zone ②, data on zone ② is derived and produced in the second sensing area 110 (S400). After that, if the motion of the user in zone ② is completed, that is, if the data on zone ② is ended and a motion of the user is sensed in zone ④ (S410-Y), data on zone ④ is produced (S430).

However, if the data on zone ② is ended and the motion of the user is not sensed in zone ④ (S410-N), since there is only the data on zone ②, a movement of the user comes to be determined based solely on the data on zone ② (S420).

Back again to the step S440, if the data on zone ④ is ended and a motion of the user is sensed in zone ⑥ (S440-Y), data on zone ⑥ is produced (S460). At this time, if data on another zone is not produced, the movement of the user is processed based on the data on zone ⑥ (S470). To the contrary, if the data on another zone is produced, the above steps are repeated to generate data on zone ⓝ (S480). These data on the respective zones may be combined to determine a whole movement of the user.

On the other hand, if after the data on zone ②, as first data, is produced, the motions of the user on other zones are sensed within a predetermined time 't' (S500-Y), the data on zones ④, ⑥, ⓝ, ... are produced and according to the cumulative data, the movement of the user is processed, according to the process as described above (S510). However, if the motions of the user on other zones are sensed after the predetermined time t, the movement of the user is processed based on data on zones newly sensed after the predetermined time `t' (S490).

Also, although there is not illustrated in FIG. 6 or 7, the first sensing area 100 may be embodied to act also as a fingerprint recognizing sensor in sensing methods of the various exemplary embodiments.

At this time, with respect to whether the first sensing area 100 should act as the fingerprint recognizing sensor, the first sensing area 100 will be able to be controlled to act as the fingerprint recognizing sensor only when the user inputs her or his fingerprint in the first sensing area 100 for a given period of time. Also, to control the first sensing area 100 not to sense the fingerprint of the user, a separate function key or a locking device may be provided, thereby preventing the fingerprint of the user from being inadvertently sensed while the user uses the first sensing area 100 as the touch pad. Accordingly, the fingerprint recognition state of the first sensing area 100 can be deactivated regardless of a sensed touch for a given time.

According to the various exemplary embodiments as described above, the sensing apparatus can be embodied to simultaneously have the fingerprint recognizing sensor and the touch pad sensor. The sensing apparatus according to the technical sprit of the exemplary embodiments can have both the fingerprint recognizing function and the touch pad function even in a restricted space, thus to enhance a convenience of the user.

Further, it will be possible for a developer of a product, which simultaneously needs the fingerprint recognizing sensor and the touch pad sensor, to fabricate the product at lower costs. On the other hand, the pad unit 10 disclosed in the various embodiments as described above may be embodied to form a single touch pad apparatus in itself.

According to another embodiment, a touch pad apparatus may include a plurality of sensor parts. For instance, the touch pad apparatus may include two sensors, such as a first sensor part and a second sensor part.

Among these, the first sensor part may have a non-sensing area therein. The non-sensing area means an area where a sensing operation is not performed because a sensor corresponding the first sensor part is not present in that area.

The second sensor part may be disposed in the non-sensing area of the first sensor part. The second sensor part is formed of a sensor different from that of the first sensor part, so that it may perform a sensing operation different from that of the first sensor part.

On the other hand, the first and the second sensor parts may correspond to the first and the second sensing areas 100 and 110, respectively.

Thus, the first and the second sensor parts may be configured or arranged in various forms, as illustrated in FIGS. 2A to 2D.

According to the various exemplary embodiments, the sensing apparatus simultaneously has the fingerprint recognizing sensor and the touch pad sensor to have both the fingerprint recognizing function and the touch pad function even in the restricted space and to enhance the convenience of the user. Further, the product developer can also provides the sensing apparatus, which simultaneously has the fingerprint recognizing sensor and the touch pad sensor, at lower costs.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A composite sensing apparatus comprising:
a pad unit comprising a first sensing area for sensing a fingerprint, and a second sensing area for sensing a touch state; and
a control unit to generate control signals according to results sensed by the first and the second sensing areas.

2. The apparatus of claim 1, wherein the control unit determines a movement amount per unit time based on at least one of a motion of a user sensed in the first sensing area and a motion of the user sensed in the second sensing area, and determines a movement of the user based on the determined movement amount per unit time.

3. The apparatus of claim 1 or 2, wherein when at least one motion of a user is sensed in the second sensing area and then sensed in the first sensing area, the control unit combines the results sensed by the first and the second sensing areas to determine a movement of a user.

4. The apparatus of any one of claims 1 to 3, wherein the pad unit further comprises a gap area which is interposed between and separates the first and the second sensing areas.

5. The apparatus of claim 4, wherein, when at least one motion of a user is sensed in the second sensing area and then sensed in the first sensing area within a predetermined time, the control unit determines that a movement of the user is made from the second sensing area to the first second sensing area through the gap area.

6. The apparatus of any one of claims 1 to 5, wherein when at least one motion of a user is sensed in the first sensing area and sensed in the second sensing area, the control unit combines the results sensed by the first and the second sensing areas to determine a movement of a user.

7. The apparatus of any one of claims 1 to 6, wherein the first sensing area is disposed in a central portion of the second sensing area.

8. The apparatus of any one of claims 1 to 7, wherein the control unit determines a present state of the first sensing area as a fingerprint recognition state when a touch of a user sensed in the first sensing area is detected as being maintained for more than a predetermined time.

9. A sensing method using a pad unit comprising a first sensing area for sensing a fingerprint, and a second sensing area for sensing a touch state, comprising:
sensing a motion of a user in at least one of the first and the second sensing areas; and
determining a movement of the user based on results of the sensing.

10. The method of claim 9, further comprising: generating control signals based on the determined movement of the user.

11. The method of claim 9 or 10, wherein the determining comprises determining a movement amount per unit time based on at least one of the motion of the user sensed in the first sensing area and the motion of the user sensed in the second sensing area, and determining the movement of the user based on the determined movement amount per unit time.

12. The method of any one of claims 9 to 11, wherein when at least one motion of the user is sensed in the second sensing area and then sensed in the first sensing area, the determining comprises combining the results sensed in the first and the second sensing areas to determine the movement of the user.

13. The method of any one of claims 9 to 12,
wherein the pad unit further comprises a gap area which is interposed between and separates the first and the second sensing areas, and
wherein the determining comprises determining when at least one motion of the user is sensed in the second sensing area and then sensed in the first sensing area within a predetermined time, that the movement of the user is made from the second sensing area to the first second sensing area through the gap area.

14. The method of any one of claims 9 to 13, wherein the determining comprises determining that the motion of the user is made from a motion starting point of the user in the second sensing area to a motion completing point of the user in the first sensing area.

15. The method of any one of claims 9 to 14, wherein when at least one motion of the user is sensed in the first sensing area and then sensed in the second sensing area, the determining comprises combining the results sensed in the first and the second sensing areas to determine the movement of the user.
